# EUROPEAN PATENT APPLICATION

(11) **EP 4 175 291 A1**
(43) Date of publication of application: **03.05.2023**
(21) Application number: 22198221.8
(22) Date of filing: 27.09.2022
(51) Int. Cl.: H04N 7/14

(54) **AUTOMATICALLY DETERMINING THE PROPER FRAMING AND SPACING FOR A MOVING PRESENTER**

(30) Priority: 28.10.2021 US 202117452680
(71) Applicant: Plantronics, Inc., Santa Cruz, California 95060 (US)
(72) Inventor: SCHAEFER, Stephen Paul, Santa Cruz, 95060 (US); CHILDRESS, Jr., Rommel Gabriel, Santa Cruz, 95060 (US)
(74) Representative: Haseltine Lake Kempner LLP

(57) **Abstract**

The size of a rule of thirds frame (F2; F3; F4; FP) covering a presenter and the zooming and panning of a videoconference camera (816; 900) are based on the motion of a presenter. The size of the frame (F2; F3; F4; FP), and thus provided walking space in the frame, varies (740; 742; 744) with the speed of the presenter. The slower the presenter, the smaller and tighter the frame (F2; F3; F4; FP). The faster the presenter, the larger and the looser the frame (F2; F3; F4; FP). If the presenter is pacing, a pacing frame (FP) is developed that is centered on the limits of the pacing and is large enough to cover both ends of the pacing. The movement frame and the pacing frame (FP) provide a pleasant experience for a viewer, one where the presenter does not appear cramped or walking out of the frame.

## Description

### FIELD OF THE INVENTION

The present disclosure relates to video stream processing, and more particularly to transmission of images of a moving individual.

### BACKGROUND

In many education settings a presenter, such as a teacher, lecturer or speaker, is speaking to an audience, either local, remote or a combination. Often, the presenter is more comfortable moving around than just standing stationary. Because of that, videoconferencing endpoints include a mode for presenter tracking, where the camera pans to follow the presenter. However, most videoconferencing endpoints strive to place the presenter in the center of the frame. While this is acceptable if the presenter is not moving, when the presenter is moving this often results in the presenter appearing very close to the edge of the frame in the direction the presenter is moving, due to time lags in the presenter tracking software. This results in a cramped and uncomfortable feeling for the viewer, as it appears that the presenter is about to run into the edge of the frame or walk out of the frame. In some instances, the presenter tracking software is fast enough to keep the presenter near center of the frame, but this still results in a cramped and uncomfortable feeling for the viewer.

### BRIEF DESCRIPTION OF THE DRAWINGS

Fig. 1 is an illustration of a presenter and an audience.
Fig. 2 is an illustration of framing for a standing presenter according to the present invention.
Fig. 3 is an illustration of framing for a walking presenter according to the present invention.
Fig. 4 is an illustration of framing for a jogging presenter according to the present invention.
Fig. 5 is an illustration of framing for a running presenter according to the present invention.
Fig. 6 is an illustration of framing for a pacing presenter according to the present invention.
Figs. 7A-7C are a flowchart of operation of a near end videoconference endpoint for a moving presenter according to the present invention.
Fig. 8 is a block diagram of a codec according to the present invention.
Fig. 9 is a block diagram of a camera according to the present invention.
Fig. 10 is a block diagram of the processor units of Figs. 11 and 12.
Fig. 11 is an illustration of the front view of a camera according to the present invention.

### DETAILED DESCRIPTION

In examples according to the present invention, the size of a rule of thirds frame covering a presenter and the zooming and panning of a videoconference camera are based on the motion of a presenter. The size of the frame, and thus provided walking space in the frame, varies with the speed and the pose of the presenter. The slower the presenter, the smaller and tighter the frame. The faster the presenter, the larger and the looser the frame. If the presenter is pacing, a pacing frame is developed that is centered on the limits of the pacing and is large enough to cover both ends of the pacing. The movement frame and the pacing frame provide a pleasant experience for a viewer, one where the presenter does not appear cramped or walking out of the frame.

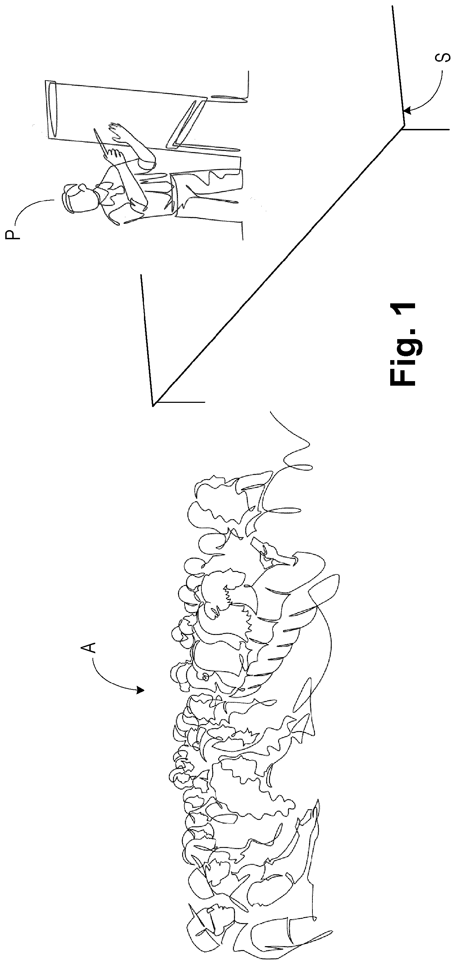

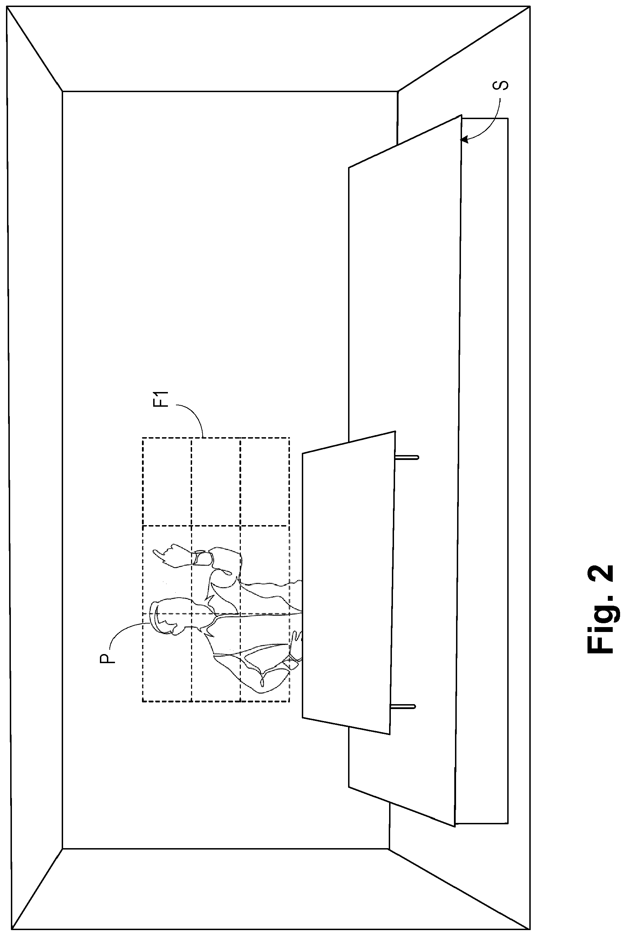

Referring now to Figure 1, a presenter P is illustrated presenting it to an audience A from a raised stage S. There can be additional audience members connected online to a videoconferencing endpoint having a camera directed at the presenter. Figure 2 illustrates the presenter P in a stationary standing position with an arm moving. A rule of thirds frame F1 is overlaid over the presenter P to indicate a desirable framing configuration for the presenter P while in the standing position. As can be seen, the center of the presenter P's face on the left one third vertical line of the frame F1 and the presenter P's face is slightly above the upper one third horizontal line of the frame F1. The frame F1 is tightly spaced to the presenter P. This provides a pleasing view of the presenter P to a viewer of the videoconference.

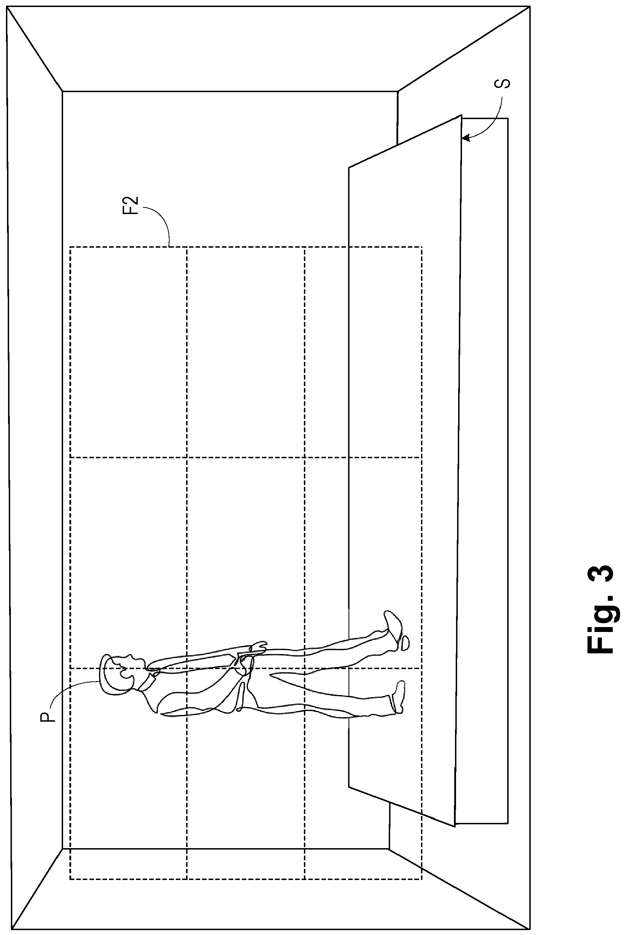

In Figure 3, the presenter P has started walking to the right on the stage S. A rule of thirds frame F2 is much larger than the frame F1 of Figure 2 as the camera has zoomed out. As can be seen, the presenter P is still on a one third vertical line of the frame F2 and near a one third horizontal line of frame F2, but the frame F2 is much larger to capture the entire presenter P and because of the movement of the presenter P. This size for the frame F2 also provides a desired looseness based on the movement of the presenter P. The frame F2 is larger to allow the presenter P space to walk into the frame F2. If the frame F2 were smaller, such as the size of the frame F1, the presenter P would appear to be walking into the right edge of the frame F1 and thus providing a uncomfortable view for the viewer. By having the frame F2 be larger, and the framing be looser or wider as determined by the zoom amount, the viewer is more comfortable as a presenter P is not about to walk into the edge of the frame F2.

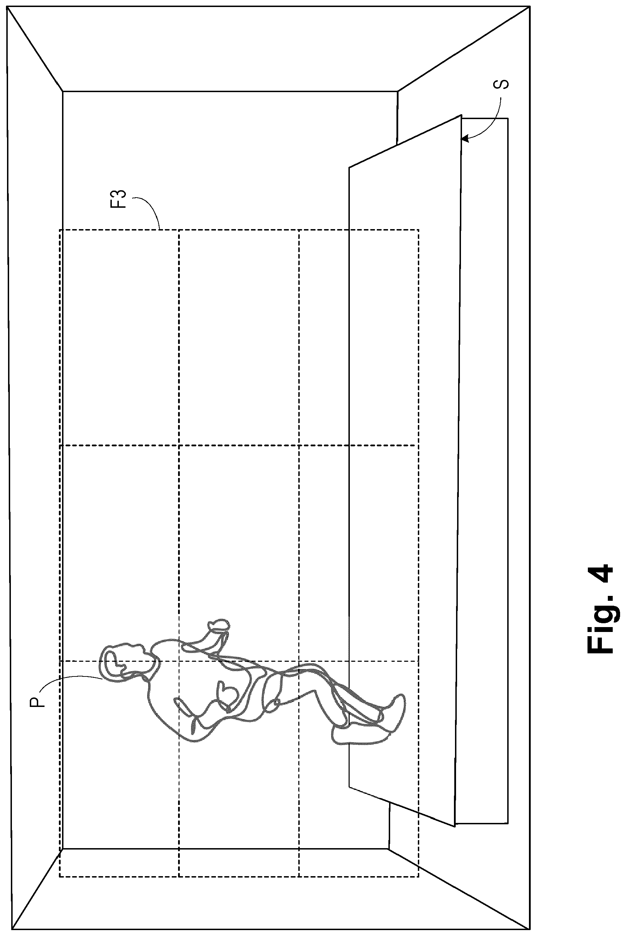

Figure 4 illustrates the presenter P jogging on the stage S, in this case in the left to the right direction. A rule of thirds frame F3 is even larger than the frame F2 of Figure 3 and the camera has zoomed farther out because of the increased speed of the presenter P, having changed from a walk to a jog. The increased speed results in further loosening or widening of the framing.

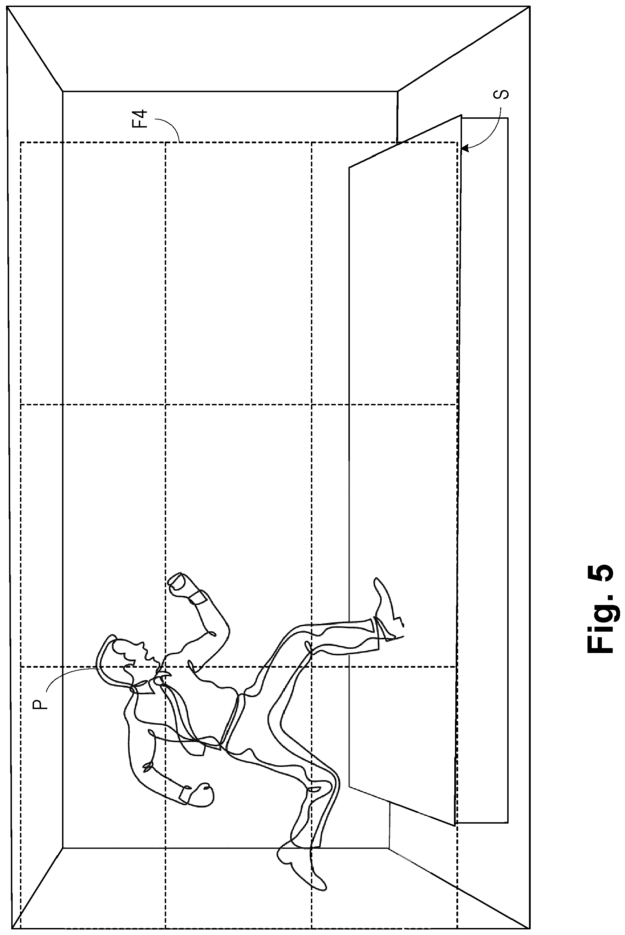

Figure 5 illustrates the presenter P running across the stage S with a much larger rule of thirds frame F4 based on the higher rate of motion. The further increased speed of the presenter P results in an even looser or wider framing based on an even greater zooming out of the camera. Therefore, as seen in Figures 3, 4 and 5, when the presenter P is moving, the size of the frame used to capture the presenter P changes in size based on the speed of the presenter P. As the framing is being performed using the rule of thirds or a desired looseness amount, the walking space of the presenter P then also changes size based on the speed of the presenter P. If the presenter P is fixed as in Figure 2, the frame is at its tightest and narrowest size and increases related to the speed of the presenter P as shown in the progression through Figures 3, 4 and 5.

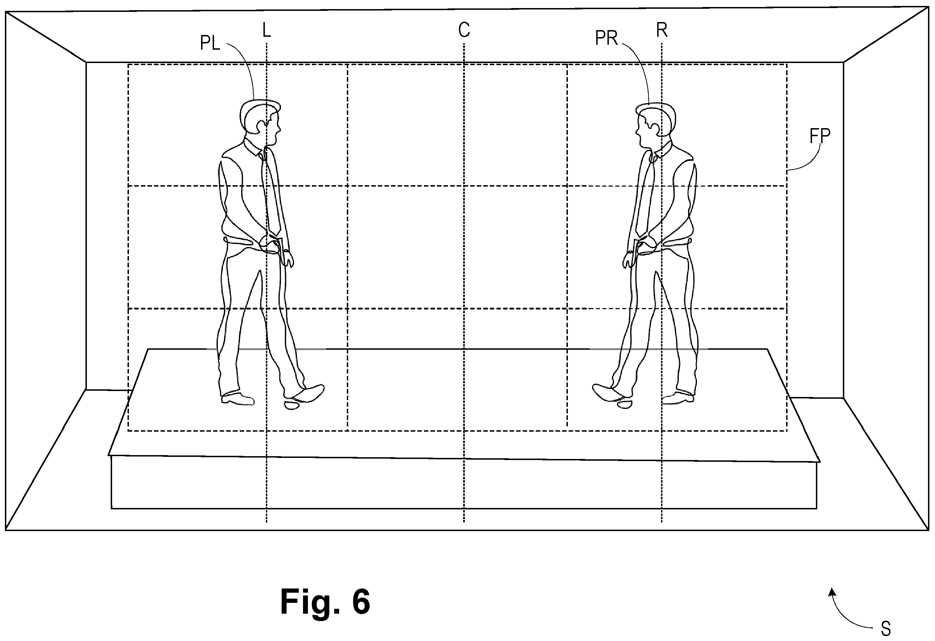

Figure 6 illustrates a rule of thirds pacing frame FP used when the presenter P is pacing back and forth on the stage S. The leftmost position of the pacing is determined to be the position L for the left presenter position P_{L} and the position R for the right presenter position P_{R}. The pacing frame FP is sized to allow the entire pacing distance with small amounts of space at each end to be captured, so that reframing is not required after the limits of the pacing of the presenter P have been determined. The pacing frame FP stays at the larger level, as in pacing frame FP that includes positions L and R, as the presenter P paces back and forth across the stage. The pacing frame FP is centered on the centerline C between position L and position R. Because the viewer understands that the pacing presenter P will not actually walk off either direction of the pacing frame because of the pacing motion, the viewer is comfortable with the pacing frame FP even though it does not strictly comply with the rule of thirds or a looseness related to the speed of the pacing.

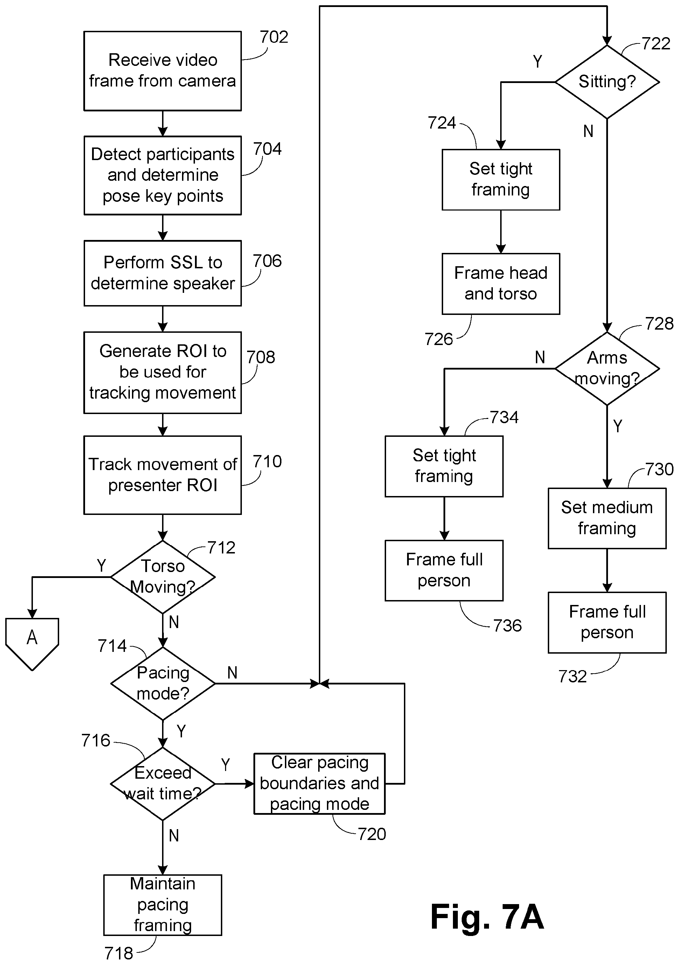

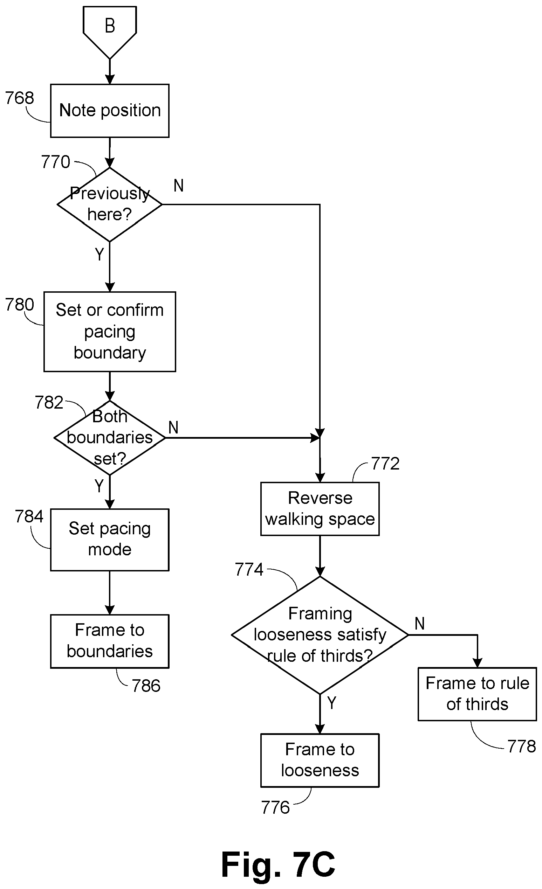

Figures 7A-7C are a flowchart of framing of a moving presenter as illustrated in Figures 3-6. In step 702, a sample video frame is received from the camera of a videoconference endpoint. In one example, this sample video frame is received at a relatively slow rate, such as one per 100ms to 500ms. This slow rate is acceptable because generally the speaking participant does not change speed or direction that frequently. In step 704, the participants in the view are detected in the sample video frame and pose key points are determined for each participant. In the case of the presenter mode operation, this generally results in detecting the single participant in most classroom or lecture cases. In the case of a panel, there will be multiple participants in view. Example key points are eyes, nose, ears, elbows, shoulders, knees, hips, feet and others. The participant detection and pose key point determinations are performed using neural networks such as PoseNet in some examples according to the present invention, but other methods can be used. In step 706, sound source localization is used to determine which person among many is the speaker or presenter.. In step 708, pose estimation using the key points for the speaker is used to generate a region of interest (ROI) to be used in tracking the presenter.

In step 710, the movement of the presenter ROI is tracked based on comparison with previous or succeeding video frames. The video frames used in the tracking are all video frames, not just the sample video frames, in some examples according to the present invention. In other examples, a reduced set of video frames is used, but still much more frequent than the sample video frames. In some examples, movement is detected in less than 30 ms to 50 ms. The tracking is performed in three dimensions, with the lateral movement of the ROI providing the x and y directions and change in the width of the ROI providing the z direction of a location vector. In some examples, the tracking of the ROI is performed using a neural network, but other methods can be used.

In step 712, it is determined if the presenter's torso is moving, the presenter moving as opposed to the presenter's arms moving. Torso movement is determined if the vector value of the ROI change exceeds a minimum movement threshold number of pixels over a selected number of video frames. Having the change in location of the ROI below a stillness threshold for a number of video frames indicates that the presenter is not moving. If the presenter is moving, the movement amount is stored to develop speed or velocity values in three dimensions and in units such as pixels/ms or pixles/sec.

If there is no movement, in step 714 it is determined if pacing mode is in effect. Pacing mode is a state where the framing is determined based on the extent of pacing of the presenter. If pacing mode is in effect, in step 716 it is determined if a pacing mode nonmoving wait time has been exceeded. If not, in step 718 pacing framing, as discussed with regard to Fig. 6, is maintained. If the wait time has been exceeded, in step 720 the pacing boundaries, which are the determined left and right limits of the pacing, are cleared and pacing mode is cleared, so that pacing mode is no longer in effect. After step 720 or if pacing mode was not in effect in step 714, in step 722 it is determined if the presenter is sitting. This can be done based on analyzing the key points of the presenter. If the presenter is seated, in step 724 a looseness framing setting is set to tight and in step 726 the head and torso of the presenter are framed. If not seated as determined in step 722, in step 728 it is determined if the presenter's arms are moving, as is the case when the presenter is gesturing. If so, in step 730 medium framing is set to include the arms and in step 732 the full presenter is framed. If the arms are not moving, in step 734 tight framing is set and in step 736 the full presenter is framed.

If the presenter is moving in step 712, in step 738 the movement speed is determined: low, medium or fast. If the movement speed is low, in step 740 medium framing is set, such as shown in Fig. 3. If the movement speed is medium, loose framing is set in step 742, such as shown in Fig. 4. If the movement speed is high, in step 744 very loose framing is set, such as shown in Fig. 5. Following steps 740, 742 and 744, in step 746 it is determined if the direction of movement has changed. If not, in step 748 it is determined if pacing mode is in effect and that the presenter has gone beyond a set pacing boundary. If so, in step 750 the respective pacing boundary and pacing mode are cleared. Then in step 752 increased walking space is allotted in the direction of movement to provide a comfortable amount of walking space. The transition from pacing framing to movement framing occurs using easing to provide a pleasant transition.

If the pacing boundary has not been exceeded or pacing mode is not in effect, in step 754 it is determined if the speed of the presenter has changed between sample video frames. If the speed is not changed, in step 756 the framing size is maintained the same and the frame movement speed is maintained the same to provide proper walking space and to maintain the presenter in a desirable position according to the rule of thirds. If the speed has changed in step 754, in step 758 a determination is made if the presenter is moving faster. If not, in step 760 the allotted walking space is reduced. After steps 752 and 760, a determination is made in step 762 whether framing the presenter according to the looseness framing value meets the rule of thirds. If so, in step 764 the presenter is framed according to the looseness frame setting and the speed of movement of the frame is adjusted. If not, in step 766 the presenter is framed according to the rule of thirds, with walking space set to the allotted amount, which is dependent on the speed of the presenter. In some examples the allotted walking space is directly proportional to the movement speed. In some examples, the allotted walking space is allocated in discrete amounts, each amount applying to a range of movement speeds. It is understood that changing the framing size, based on either a looseness setting or the rule of thirds, is performed by changing the zoom of the camera, while matching the movement speed of the presenter is performed by panning the camera. These are both true for mechanical pan, tilt and zoom cameras and electronic pan, tilt and zoom (ePTZ) cameras.

If the direction of the presenter had changed in step 746, in step 768 the position of the presenter at the direction change is stored for later reference. In step 770, it is determined if the presenter was previously at this location. If not, in step 772 the direction of the location of the walking space in the frame is reversed to match the direction change of the presenter. Preferably this reversal is done smoothly using easing so that the presenter gradually has more walking space until the desired looseness or rule of thirds is met. In step 774, a determination is made whether framing the presenter according to the looseness framing setting meets the rule of thirds. If so, in step 776 the presenter is framed according to the looseness frame setting and the speed of movement of the frame is adjusted. If not, in step 778 the presenter is framed according to the rule of thirds, with walking space set to the allotted amount, which is dependent on the speed of the presenter.

If the presenter was previously at this location as determined in step 770, in step 780 this location is stored or confirmed as a pacing boundary, either right or left. In step 782, it is determined if both the left and right boundaries are set. If not, operation proceeds to step 772 to reverse the walking space and direction of movement of the frame. If both boundaries have been set in step 782, then in step 784 pacing mode is set and in step 786 the pacing frame is centered on the left and right boundaries of the pacing distance as illustrated in Figure 6 and the camera is zoomed to the necessary amount to meet the framing parameters. In some examples the pacing frame is not sized according to the rule of thirds or looseness framing setting, as mentioned above.

By making the size of the presenter frame relate to the movement speed of the presenter, walking space is maintained in a moving frame when utilizing the appropriate of the rule of thirds, a looseness setting or a pacing determination, even though the presenter is moving. When not in a pacing mode, as the presenter location is proportional to the speed of the presenter and the frame is moving with the presenter and walking space is provided related to the speed, the viewer is never uncomfortable with the presenter walking off the edge of the frame. In this manner, the movement of the presenter is used to provide a comfortable viewing frame based on the speed of the presenter. If the presenter is pacing, then a pacing frame is provided that maintains the presenter within the pacing frame without changing size, so the presenter comfortably walks inside the pacing frame.

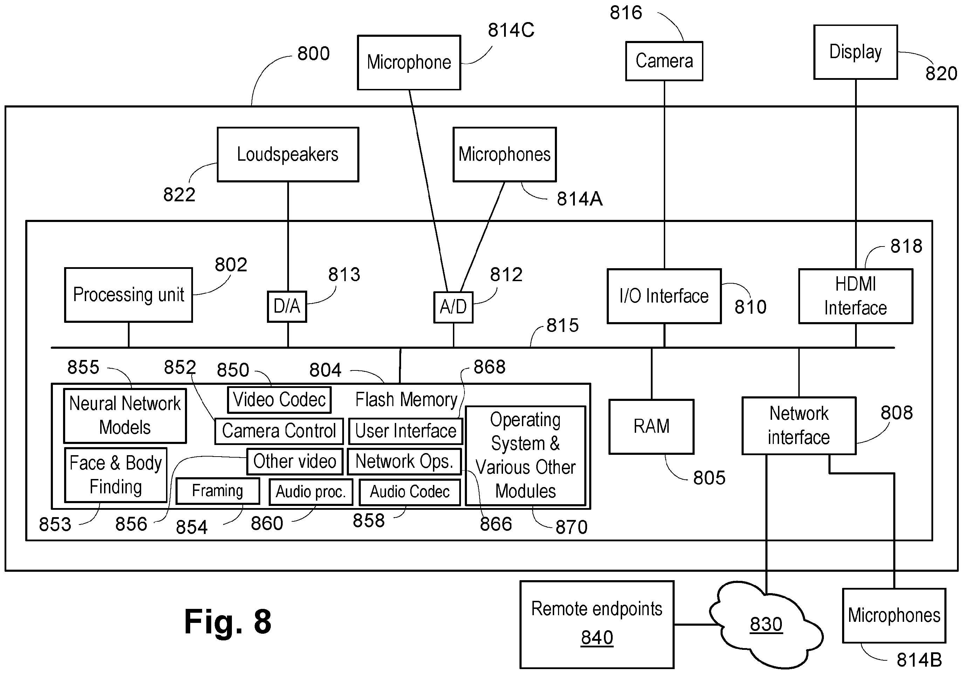

Fig. 8 illustrates aspects of a codec 800 used at a videoconference endpoint in accordance with an example of this disclosure. The codec 800 may include loudspeaker(s) 822, though in many cases the loudspeaker 822 is provided in the monitor 820. Microphone(s) 814A and 814C and loudspeaker(s) 822 are interfaced via an interface to a bus 815, the microphones 814A and 814C through an analog to digital (A/D) converter 812 and the loudspeaker 822 through a digital to analog (D/A) converter 813. In some examples, the microphones 814A are built into the codec 800, while microphone 814C represents an external, wireless lavalier microphone plugged into a jack of the codec 800. The codec 800 also includes a processing unit 802, a network interface 808, a flash memory or other non-volatile program storage device 804, RAM 805, and an input/output (I/O) general interface 810, all coupled by bus 815. The camera 816 is illustrated as connected to the camera I/O interface 810. Microphone(s) 814B are connected to the network interface 808. An HDMI or video output interface 818 is connected to the bus 815 and to the external display or monitor 820. Bus 815 is illustrative and any interconnect between the elements can used, such as Peripheral Component Interconnect Express (PCIe) links and switches, Universal Serial Bus (USB) links and hubs, and combinations thereof. The camera 816 and microphones 814A, 814B can be contained in housings containing the other components or can be external and removable, connected by wired or wireless connections. In a classroom or lecture environment, the camera 816 would generally be external to simplify location of both the camera 816 and the codec 800.

The processing unit 802 can include digital signal processors (DSPs), central processing units (CPUs), graphics processing units (GPUs), dedicated hardware elements, such as neural network accelerators and hardware codecs, and the like in any desired combination.

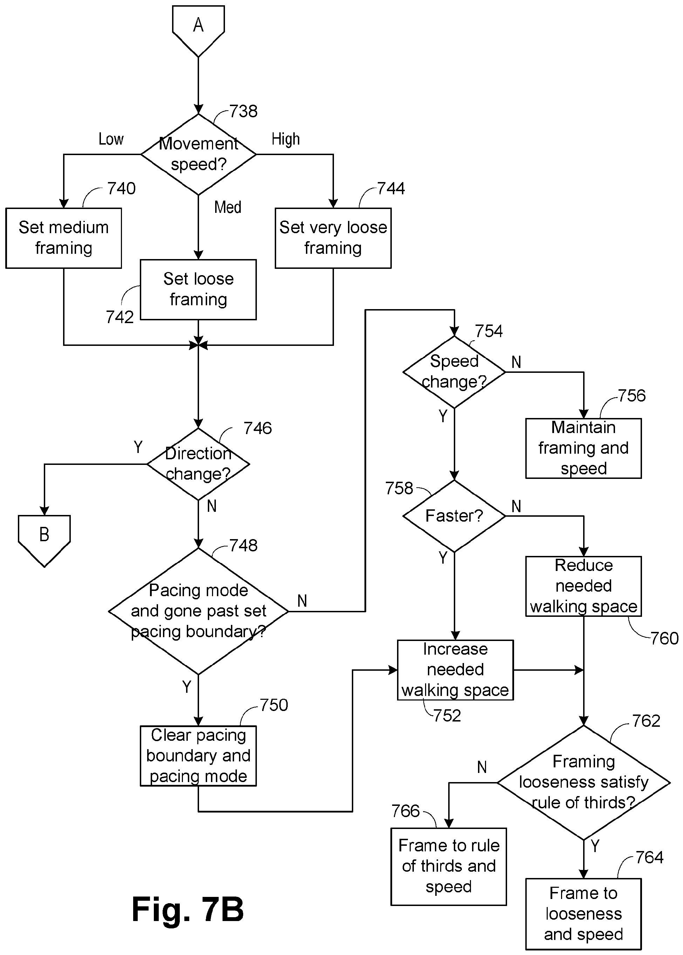

The flash memory 804 stores modules of varying functionality in the form of software and firmware, generically programs, for controlling the codec 800. Illustrated modules include a video codec 850; camera control 852; face and body finding 853; neural network models 855; framing 854, which performs the operations of Figures 7A and 7B with the assistance of the neural network models 855, face and body finding 853 and sound source localization 960, providing direction to the camera control 852 for zooming and panning; other video processing 856; audio codec 858; audio processing 860; network operations 866; user interface 868 and operating system and various other modules 870. The RAM 805 is used for storing any of the modules in the flash memory 804 when the module is executing, storing video images of video streams and audio samples of audio streams and can be used for scratchpad operation of the processing unit 802.

The network interface 808 enables communications between the codec 800 and other devices and can be wired, wireless or a combination. In one example, the network interface 808 is connected or coupled to the Internet 830 to communicate with remote endpoints 840 in a videoconference. In one or more examples, the general interface 810 provides data transmission with local devices such as a keyboard, mouse, printer, projector, display, external loudspeakers, additional cameras, and microphone pods, etc.

In one example, the camera 816 and the microphones 814A, 814B, 814C capture video and audio, respectively, in the videoconference environment and produce video and audio streams or signals transmitted through the bus 815 to the processing unit 802. In at least one example of this disclosure, the processing unit 802 processes the video and audio using algorithms in the modules stored in the flash memory 804. Processed audio and video streams can be sent to and received from remote devices coupled to network interface 808 and devices coupled to general interface 810. This is just one example of the configuration of a codec 800.

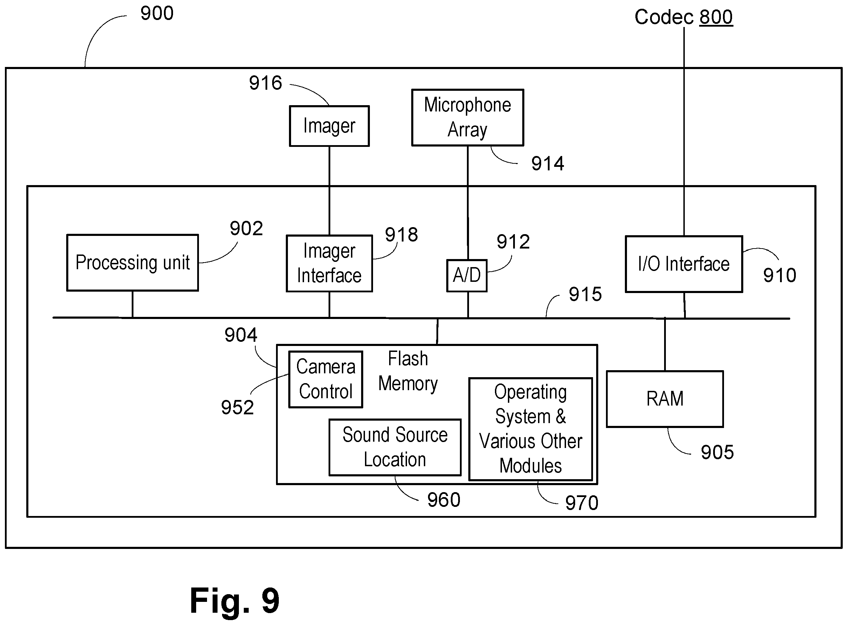

Fig. 9 illustrates aspects of a camera 900, which may be camera 816, that is separate from the codec 800, in accordance with an example of this disclosure. The camera 900 includes an imager or sensor 916 and a microphone array 914 interfaced via interfaces to a bus 915, the microphone array 914 through an analog to digital (A/D) converter 912 and the imager 916 through an imager interface 918. The camera 900 also includes a processing unit 902, a flash memory or other non-volatile program storage device 904, RAM 905, and an input/output general interface 910, all coupled by bus 915. Bus 915 is illustrative and any interconnect between the elements can used, such as Peripheral Component Interconnect Express (PCIe) links and switches, Universal Serial Bus (USB) links and hubs, and combinations thereof. The codec 800 is connected to the I/O interface 910, preferably using a USB interface.

The processing unit 902 can include digital signal processors (DSPs), central processing units (CPUs), graphics processing units (GPUs), dedicated hardware elements, such as neural network accelerators and hardware codecs, and the like in any desired combination.

The flash memory 904 stores modules of varying functionality in the form of software and firmware, generically programs, for controlling the camera 900. Illustrated modules include camera control 952, sound source localization 960 and operating system and various other modules 970. The RAM 905 is used for storing any of the modules in the flash memory 904 when the module is executing, storing video images of video streams and audio samples of audio streams and can be used for scratchpad operation of the processing unit 902.

Other configurations, with differing components and arrangement of components, are well known for both videoconferencing endpoints and for devices used in other manners.

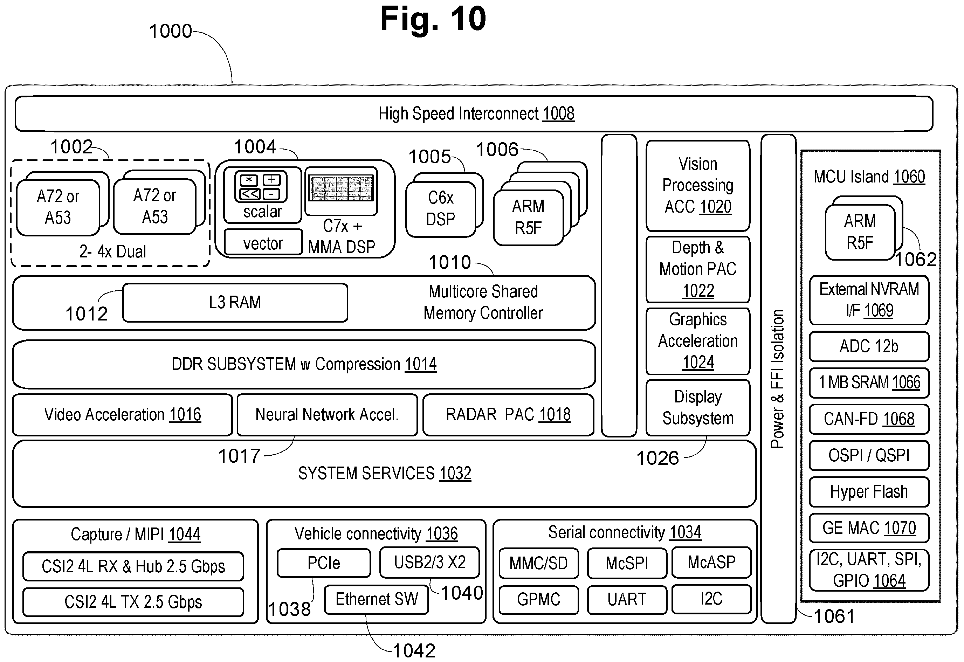

Fig. 10 is a block diagram of an exemplary system on a chip (SoC) 1000 as can be used as the processing unit 802 or 902. A series of more powerful microprocessors 1002, such as ARM^{®} A72 or A53 cores, form the primary general purpose processing block of the SoC 1000, while a more powerful digital signal processor (DSP) 1004 and multiple less powerful DSPs 1005 provide specialized computing capabilities. A simpler processor 1006, such as ARM R5F cores, provides general control capability in the SoC 1000. The more powerful microprocessors 1002, more powerful DSP 1004, less powerful DSPs 1005 and simpler processor 1006 each include various data and instruction caches, such as L1I, L1D, and L2D, to improve speed of operations. A high-speed interconnect 1008 connects the microprocessors 1002, more powerful DSP 1004, simpler DSPs 1005 and processors 1006 to various other components in the SoC 1000. For example, a shared memory controller 1010, which includes onboard memory or SRAM 1012, is connected to the high-speed interconnect 1008 to act as the onboard SRAM for the SoC 1000. A DDR (double data rate) memory controller system 1014 is connected to the high-speed interconnect 1008 and acts as an external interface to external DRAM memory. The RAM 805 or 905 are formed by the SRAM 1012 and external DRAM memory. A video acceleration module 1016 and a radar processing accelerator (PAC) module 1018 are similarly connected to the high speed interconnect 1008. A neural network acceleration module 1017 is provided for hardware acceleration of neural network operations. A vision processing accelerator (VPACC) module 1020 is connected to the high-speed interconnect 1008, as is a depth and motion PAC (DMPAC) module 1022.

A graphics acceleration module 1024 is connected to the high-speed interconnect 1008. A display subsystem 1026 is connected to the high-speed interconnect 1008 to allow operation with and connection to various video monitors. A system services block 1032, which includes items such as DMA controllers, memory management units, general purpose I/O's, mailboxes and the like, is provided for normal SoC 1000 operation. A serial connectivity module 1034 is connected to the high-speed interconnect 1008 and includes modules as normal in an SoC. A vehicle connectivity module 1036 provides interconnects for external communication interfaces, such as PCIe block 1038, USB block 1040 and an Ethernet switch 1042. A capture/MIPI module 1044 includes a four lane CSI 2 compliant transmit block 1046 and a four lane CSI 2 receive module and hub.

An MCU island 1060 is provided as a secondary subsystem and handles operation of the integrated SoC 1000 when the other components are powered down to save energy. An MCU ARM processor 1062, such as one or more ARM R5F cores, operates as a master and is coupled to the high-speed interconnect 1008 through an isolation interface 1061. An MCU general purpose I/O (GPIO) block 1064 operates as a slave. MCU RAM 1066 is provided to act as local memory for the MCU ARM processor 1062. A CAN bus block 1068, an additional external communication interface, is connected to allow operation with a conventional CAN bus environment in a vehicle. An Ethernet MAC (media access control) block 1070 is provided for further connectivity. External memory, generally nonvolatile memory (NVM)such as flash memory 104, is connected to the MCU ARM processor 1062 via an external memory interface 1069 to store instructions loaded into the various other memories for execution by the various appropriate processors. The MCU ARM processor 1062 operates as a safety processor, monitoring operations of the SoC 1000 to ensure proper operation of the SoC 1000.

It is understood that this is one example of an SoC provided for explanation and many other SoC examples are possible, with varying numbers of processors, DSPs, accelerators and the like.

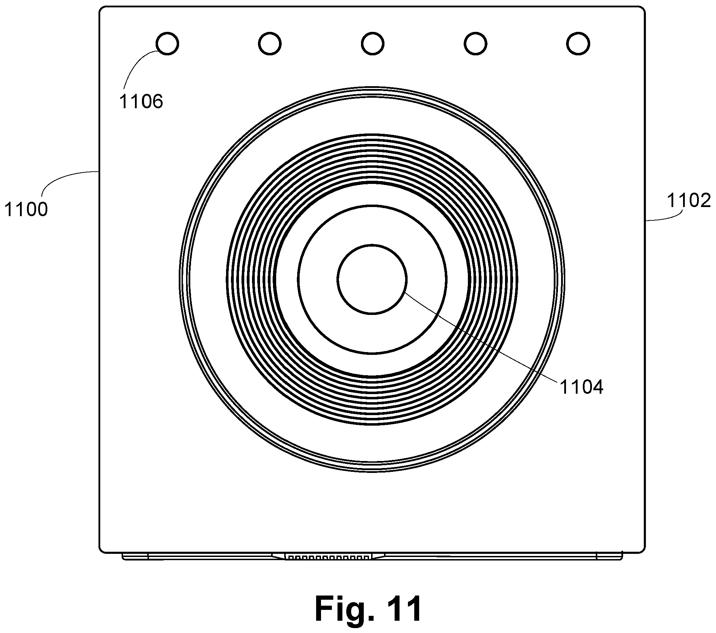

Fig. 11 provides a front view of a camera 900, such as the camera 816. The camera 900 has a housing 1102 with a lens 1104 provided in the center to operate with the imager 916. A series of five openings 1106 are provided as ports to the microphones in the microphone array 914. It is noted that the microphone openings 1106 form a horizontal line to provide the desired angular determination for the sound source localization algorithm. This is an exemplary illustration of a camera 900 and numerous other configurations are possible, with varying lens and microphone configurations.

While the description above has focused on framing a presenter, such as a teacher or lecturer, in a videoconference, it is understood that the presenter can be any object that is moving and which is desired to be automatically tracked without operator intervention or control, such as an athlete or moving vehicle, in which case the performance or operation of the individual or object is considered the presentation and can apply to streaming, recording and broadcasting.

Some examples according to the present invention include a method of framing a presenter in a videoconference, by detecting a presenter in a video frame, tracking movement of the presenter, and developing a frame that has a size based on the movement of the presenter and that provides walking space for the presenter based on the movement of the presenter. In some examples, the frame size and walking space are proportional to the speed of the presenter. In some examples the presenter is framed according to the rule of thirds, while in other examples the presenter is framed based on a looseness framing setting. In some examples, the frame size and walking space are proportional to the speed of the presenter. In some examples, the presenter is pacing. In some examples, the pacing has a left end and a right end, and the frame encompasses the left end and the right end. In some examples, the frame is centered on the centerline between the left end and the right end.

Some examples according to the present invention include a videoconference endpoint having a processor, a network interface coupled to the processor for connection to a far end videoconference endpoint, a camera interface coupled to the processor for receiving at least one video stream of captured images of containing a presenter, a video output interface coupled to the processor for providing a video stream to a display for presentation, and memory coupled to the processor for storing instructions executed by the processor to perform the operations of detecting the presenter in a video frame, tracking movement of the presenter, and developing a frame that has a size based on the movement of the presenter and that provides walking space for the presenter based on the movement of the presenter. In some examples of the videoconference endpoint, the frame size and walking space are proportional to the speed of the presenter. In some examples of the videoconference endpoint, the presenter is framed according to the rule of thirds, while in other examples the presenter is framed based on a looseness framing setting. In some examples of the videoconference endpoint, the frame size and walking space are proportional to the speed of the presenter. In some examples of the videoconference endpoint, the movement of the presenter is pacing. In some examples of the videoconference endpoint, the pacing has a left end and a right end, and the frame encompasses the left end and the right end. In some examples of the videoconference endpoint, the frame is centered on the centerline between the left end and the right end.

Some examples according to the present invention include a non-transitory program storage device or devices, readable by one or more processors in a videoconference endpoint and comprising instructions stored thereon to cause the one or more processors to perform a method of detecting a presenter in a video frame, tracking movement of the presenter, and developing a frame that has a size based on the movement of the presenter and that provides walking space for the presenter based on the movement of the presenter. In some examples, the method performed according to the instructions in the non-transitory program storage device or devices includes the frame size and walking space being proportional to the speed of the presenter. In some examples, the method performed according to the instructions in the non-transitory program storage device or devices includes the presenter being framed according to the rule of thirds. , while in other examples the presenter is framed based on a looseness framing setting In some examples, the method performed according to the instructions in the non-transitory program storage device or devices includes the frame size and walking space being proportional to the speed of the presenter. In some examples, the method performed according to the instructions in the non-transitory program storage device or devices includes the movement of the presenter being pacing. In some examples, the method performed according to the instructions in the non-transitory program storage device or devices includes the pacing having a left end and a right end, the frame encompassing the left end and the right end, and the frame being centered on the centerline between the left end and the right end.

The above description is illustrative and not restrictive. Many variations of the invention will become apparent to those skilled in the art upon review of this disclosure. The scope of the invention should therefore be determined not with reference to the above description, but instead with reference to the appended claims along with their full scope of equivalents.

## Claims

1. A method of framing a presenter in a videoconference by a videoconferencing endpoint, the method comprising:
detect, by the videoconferencing endpoint, a presenter in a video frame;
track, by the videoconferencing endpoint, movement of the presenter; and
develop, by the videoconferencing endpoint, a frame that has a size based on the movement of the presenter and that provides walking space for the presenter based on the movement of the presenter.

2. The method of claim 1, wherein the frame size and walking space are proportional to the speed of the presenter.

3. The method of claim 1, wherein the presenter is framed according to the rule of thirds.

4. The method of claim 1, wherein the presenter is framed according to a looseness framing setting.

5. The method of claim 1, wherein the movement of the presenter is pacing.

6. The method of claim 5, wherein the pacing has a left end and a right end, and the frame encompasses the left end and the right end.

7. The method of claim 6, wherein the frame is centered on the centerline between the left end and the right end.

8. A videoconference endpoint comprising:
a processor;
a network interface coupled to the processor for connection to a far end videoconference endpoint;
a camera interface coupled to the processor for receiving at least one video stream of captured images of containing a presenter;
a video output interface coupled to the processor for providing a video stream to a display for presentation; and
memory coupled to the processor for storing instructions executed by the processor to perform the operations of:
detecting the presenter in a video frame;
tracking movement of the presenter; and
developing a frame that has a size based on the movement of the presenter and that provides walking space for the presenter based on the movement of the presenter.

9. The videoconference endpoint of claim 8, wherein the frame size and walking space are proportional to the speed of the presenter.

10. The videoconference endpoint of claim 8, wherein the presenter is framed according to the rule of thirds.

11. The videoconference endpoint of claim 8, wherein the presenter is framed according to a looseness framing setting.

12. The videoconference endpoint of claim 8, wherein the movement of the presenter is pacing.

13. The videoconference endpoint of claim 12, wherein the pacing has a left end and a right end, and the frame encompasses the left end and the right end.

14. The videoconference endpoint of claim 13, wherein the frame is centered on the centerline between the left end and the right end.

15. A non-transitory program storage device or devices, readable by one or more processors in a videoconference endpoint and comprising instructions stored thereon to cause the one or more processors to perform a method comprising the steps of:
detect a presenter in a video frame;
track movement of the presenter; and
develop a frame that has a size based on the movement of the presenter and that provides walking space for the presenter based on the movement of the presenter.
